# EUROPEAN PATENT SPECIFICATION

(11) **EP 1 792 042 B1**
(45) Date of publication and mention of the grant of the patent: **21.01.2009**
(21) Application number: 05782418.7
(22) Date of filing: 09.09.2005
(51) Int. Cl.: E21B 21/06

(54) **METHOD AND APPARATUS FOR REMEDIATING DRILL CUTTINGS**
VERFAHREN UND VORRICHTUNG ZUR SANIERUNG VON BOHRKLEIN
PROCEDE ET APPAREIL DE TRAITEMENT DES DEBLAIS DE FORAGE

(30) Priority: 20.09.2004 US 945270
(43) Date of publication of application: 06.06.2007
(73) Proprietor: Varco I/P, Inc., Houston TX 77042-4200 (US)
(72) Inventor: STRONG, Gary, Steven, Huntsville, Texas 77340 (US); PIERCE, Dale Alton, Texas 77381 (US); GADDIS Jr., E. Cliff, Pasadena, Texas 77502 (US); STONE, Lyndon, Ray, Humble, Texas 77346 (US); LEE, Cecil, Hixson, TN 37343 (US); WOOD, Bradford, Russell, Houston, Texas 77041 (US); SEYFFERT, Kenneth, Wayne, Houston, Texas 77018 (US)
(74) Representative: Lucas, Phillip Brian
(86) International application number: PCT/GB2005/050148
(87) International publication number: WO 2006/032931

(56) References cited:
- WO-A-89/02774
- US-A- 5 928 519
- US-A- 6 106 733
- US-A1- 2003 070 994
- US-A1- 2003 136 747

## Description

The present invention relates to a method for cleaning contaminated drill cuttings, and/or soils, in one particular aspect, wellbore drill cuttings obtained from on-shore or offshore wells.

In a variety of industrial methods, operations, and processes soil becomes contaminated with contaminants such as hydrocarbons and other volatile organic materials and substances. The prior art discloses a wide range of systems and methods for cleaning such soil and for disposal of such contaminants.

Drilling fluids used in hydrocarbon well drilling, as well known in the prior art, pick up solid cuttings and debris which must be removed if the fluid is to be re-used. Drilling fluid, called "mud," is typically either water based or oil-based. "Oil" includes, but is not limited to, diesel, crude oil, mineral oil and synthetic oil. Typically a mud with various additives is pumped down through a hollow drill string (pipe, drill collar, bit, etc.) into a well being drilled and exits through holes in a drillbit. The mud picks up drilled cuttings, such as rock, and other solids such as metal shavings, and various contaminants, such as, but not limited to, crude oil, water influx, and salt from the well and carries them upwardly away from the bit and out of the well in a space between the well walls and the drill string. At the top of the well, the contaminated solids-laden mud is discharged over a shale shaker which has a series of screens that catch and remove solids from the mud as the mud passes through them. If drilled solids are not removed from the mud used during the drilling operation, recirculation of the drilled solids can create weight, viscosity, and gel problems in the mud, as well as increasing wear on mud pumps and other mechanical equipment used for drilling.

The underflow from the shale shakers is generally further processed using hydrocyclones, centrifuges and other processing steps and stored in a mud tank. Mud is then recirculated from the mud tank into the wellbore.

The overflow of the shaker comprises cuttings and other solids contaminated with drilling fluid, which may be oil based, other oils and water. It is environmentally unfriendly to simply dump these contaminated solids in a mud pit or over the side of an offshore platform. Thus the contaminated solids are further processed to remove substantially all the oil. It is preferable to also recover the oil contaminating the solids, as well as the water. The cuttings and other solids can be used as an aggregate, for example, in the construction of roads or for infill in the development of land.

In one typical prior art system, land-based or offshore, (for example as shown in U.S. Patent 5,190,645), a well is drilled by a bit carried on a string of drill pipe as drilling mud is pumped by a pump into the drill pipe and out through nozzles in the bit. The mud cools and cleans the cutters of the bit and then passes up through the well annulus flushing cuttings out with it. After the mud is removed from the well annulus, it is treated before being pumped back into the pipe. The mud enters a shale shaker where the relatively large cuttings are removed. The mud then enters a degasser where gas can be removed if necessary. The degasser may be automatically turned on and off, as needed, in response to an electric or other suitable signal produced by a computer and communicated to degasser. The computer produces the signal as a function of data from a sensor assembly associated with shale shaker. The mud then passes to a desander and (or a desilter, optionally mounted over a shale shaker to reduce liquid losses), for removal of smaller solids picked up in the well. In one aspect, the mud next passes to a treating station where, if necessary conditioning media, such as barite, may be added. Suitable flow controls for example a valve, control the flow of media. The valve may be automatically operated by an electric or other suitable signal produced by the computer as a function of the data from sensor assembly. From the treatment station, the mud is directed to a tank from which a pump takes suction, to be re-cycled through the well. Remediation of cuttings on-site at an offshore rig is a difficult and expensive operation. It is known to remove cuttings from a rig in a barge to a land-based facility.

Thermal desorption processes are well known for remediating contaminated soil, both indirect processes in which material is isolated from flame and heat is applied above the vapourization temperature of a contaminant and direct processes in which material is directly heated with a flame. Often in direct processes, volatile contaminants are destroyed by direct flame contact and a portion of them may be thermally destroyed in a downstream oxidizer.

US 2003/0136747 discloses systems for remediating drill cuttings, disclosing *inter alia* a thermal treatment apparatus, a quenching apparatus and a dual component separator.

There has long been a need for an effective and efficient system for treating contaminated soil and drilling cuttings.

According to the present invention, there is provided a method for remediating drilled cuttings material comprising solids, oil, and water, the method comprising the steps of feeding the drilled cuttings material into a thermal treatment apparatus and heating the drilled cuttings material therein to produce heated solids and a stream with oil, water and solids therein, discharging the heated cuttings from the thermal treatment apparatus, feeding the stream to a quench apparatus to cool said stream producing a cooled stream, characterised in that the method further comprises the step of feeding the cooled stream to a weir tank and producing with the weir tank a first cleaned stream with oil therein and a dirty stream with liquid and solids therein, the weir tank also producing a second cleaned stream with water and oil therein, the weir tank comprising a tank with a wall dividing the tank into a clean side and a dirty side, the dirty side divided into a first input compartment, a second compartment, and a third compartment, a first over weir for allowing oil from the cooled stream to flow over from the first input compartment into the second compartment and a second over weir to allow oil to flow from the second compartment into the clean side, an under weir for allowing water to flow from the first compartment to the third compartment and a third over weir to allow water from the third compartment to flow into the clean side. Thus preferably, the clean side is substantially free of solids and the dirty side comprises some solids.

The present invention attempts to produce material, which is environmentally safe to dispose or use in construction and fluid which is usable as a fuel and water which can be used or is environmentally safe to dispose. The apparatus of the invention may be land-based or configured for offshore use. A wellbore drilling mixture may contain cuttings, oil, water, diesel, debris and/or other contaminants, Typically drilled cuttings contain about 15% to about 30% contaminants (for example hydrocarbons) by volume, or higher. In one aspect the present invention discloses systems and methods for remediating drilled cuttings material that use a weir tank and includes drilled cuttings, contaminants, solids, oil, and water from a wellbore, the methods including introducing the drilled cuttings material to a system for remediation, the system including a thermal treatment system, a quench system, and a weir tank system, feeding a slurry of the drilled cuttings material to the thermal treatment system and heating the slurry therein producing heated cuttings and a produced stream with oil, water and solids therein, discharging the heated cuttings from the thermal treatment system, feeding the produced stream to a quench system to cool said stream producing a cooled stream, feeding the cooled stream to a weir tank system and producing with the weir tank system a first cleaned stream with oil therein and a dirty stream with liquid and solids therein.

Advantageously, the second cleaned stream is feed into a separator apparatus for separating the oil and the water into an oil stream and a water stream. The clean oil is preferably conveyed to an oil storage tank and the water is conveyed to a water storage tank. The water may be reused in the quench apparatus and the oil may be used as a fuel for the burners in the thermal treatment apparatus. Preferably, the separator apparatus comprises a settling tank.

Preferably, the method further comprises the steps of recovering oil from the clean side of the weir tank and recovering water from the clean side of the weir tank. Advantageously, the oil is recovered from the clean aide by allowing a stream of oil to flow from a top portion of the clean side of the weir tank. Preferably, the water is recovered from the clean side by allowing a stream of oil to flow from a bottom portion of the clean side of the weir tank. Advantageously, the method further comprises the step of allowing a stream with solids oil and some water and from the second compartment to centrifuge apparatus for further processing. Preferably, an outlet is provided in the bottom portion of the second compartment to allow a stream of solids oil and some water to the centrifuge apparatus. Advantageously, the method further comprising the step of producing a first centrifuge stream with the centrifuge apparatus, the first centrifuge stream containing solids, and feeding the first centrifuge stream to the thermal treatment apparatus for further processing therein.

Preferably, the method further comprises the step of obtaining an uncondensed vapour stream from the quench apparatus, feeding the uncondensed quenched vapour stream from the quench apparatus to a condenser apparatus, said uncondensed quenched vapour stream containing solids, condensing at least part of said uncondensed quenched vapour stream producing a condensed stream, and feeding said condensed stream to the dirty side of the weir tank. Preferably, movement of the uncondensed quenched vapour stream is facilitated by a vacuum pump or impeller. Advantageously, the method further comprises the step of feeding the uncondensed quenched vapour stream into a scrubber apparatus to remove at least some solids prior to feeding the uncondensed quenched vapour stream to the condenser apparatus. Preferably, the method further comprises the step of providing a cooling apparatus to provide cooling fluid for cooling the condenser to enhance effectiveness of the condenser. Preferably, the step of producing a stream of uncondensed gases with the condenser, and oxidizing said stream of uncondensed gases. Advantageously, the step of oxidizing said stream of uncondensed gases is carried out in a thermal oxidizer.

Preferably, the thermal treatment apparatus comprises a vessel with an interior wall dividing the vessel into two intercommunicating chambers, the vessel having two spaced-apart ends and a burner at each end for heating drilled cuttings material in each chamber, the method comprising the step of passing the drilled cuttings material through said two interconnecting chambers. Preferably, a bag house filter is located on the discharge end of the thermal treatment apparatus to further filter liquid component from the discharged heated solids. Advantageously, the discharged heated solids are conveyed away from the discharge end of the thermal treatment apparatus or bag house filter, if used, by an auger. Advantageously, each burner is in a separate firebox adjacent each chamber, the method further comprising the step of igniting each burner in each firebox. Preferably, each burner is mounted within the vessel.

Advantageously, prior to feeding the drilled cuttings material to the thermal treatment apparatus, the drilled cuttings material is feed in to a separator apparatus the method further comprising the steps of separating large pieces of material from the drilled cuttings material with the separator apparatus, and then feeding the drilled cuttings material with said large pieces removed to the thermal treatment apparatus. The separator apparatus is preferably a grizzly vibrating grid and advantageously separates out large pieces of material which are greater than 2.5cm, 5cm , 7.5cm or 10 cm. Advantageously, drilled cuttings material is fed to a hopper and/or shredder before being fed into the thermal treatment apparatus.

Preferably, the drilled cuttings material is in the form of a slurry. Advantageously, the slurry contains by volume a mixture of up to about 25% oil, up to about 25% water, and up to about 50% trilled cuttings. Preferably, the slurry contains by volume a mixture of up to about 5% soil, up to about 5% water, and up to about 90% drilled cuttings. Advantageously, at least about 8 tons per hour of drilled cuttings material is processed per hour. The drilled cuttings material may comprise contaminants including hydrocarbon contaminants, the method further comprising the step of volatilizing the hydrocarbons contaminants in the thermal treatment apparatus, volatising light hydrocarbons and perhaps heavy hydrocarbons.

Preferably, the method further comprises the step of rehydrating discharged heated solids from the thermal treatment appartus with the rehydration apparatus to facilitate handling of the heated cuttings,

Advantageously, the method further comprises the step of milling the discharged heated solids. Preferably, the method further comprises the step of milling is carried out by a pug mill. The pug mill may be provided with water sprays to carry out the rehydrating step.

Preferably, the quench apparatus comprises a quench vessel and at least one water spray, the method further comprising the step of spraying cooling water with the at least one water spray into the discharge stream to produce the cooled discharge stream.

The drilled cuttings material may further comprises other contaminants.

The present invention also provides an apparatus for premediating drilled cuttings material, the apparatus comprising a thermal treatment apparatus, a quench apparatus, characterised in that the apparatus further comprises a weir tank system.

Preferably, the weir tank comprises a tank with a wall dividing the tank into a clean side and a dirty side. The dirty side is divided into a first input compartment, a second compartment, and a third compartment, a first over weir for allowing oil from the cooled stream to flow over from the first input compartment into the second compartment and a second over weir to allow oil to flow from the second compartment into the clean side, an under weir for allowing water to flow from the first compartment to the third compartment and a third over weir to allow water from the third compartment to flow into the clean side.

Pieces of acceptable size are then fed to the heater dryer (wherein certain contaminants, including but not limited to hydrocarbon contaminants), are vapourized and/or volatilized in an environmentally acceptable manner. In one aspect, a resulting gas/vapour stream with some solids therein is fed to a dual component mechanical separator which has one or more centrifugal separators whose output is fed to one or more cyclonic apparatuses and, optionally, the output of the cyclonic apparatuses is recirculated to the centrifugal separator(s). Solids separation and solids collection are thus accomplished separately and in different system components. Such a mechanical separation system includes, but is not limited to, a dual component separator in accordance with the present invention and the prior art Core Separator of LSR Technologies, Inc. of Acton, Massachusetts. Solids separated by the dual component separator are discharged for further treatment and/or collection and disposal and a resulting vapour stream is, optionally, quenched and/or condensed. In one embodiment, a liquid output of the dual component separator, following quenching, is fed to a liquid/solid separator (optionally with a water input) from which separated oil flows to an oil collection tank and separated sludge (for example fine solids and oil) flows to a collection tank or pit. Vapour from the quench step is, optionally, condensed (for example, but not limited to, using a shell-and-tube condenser) from which condensed liquids flow to the liquid/solid separator and vapour flows to a cooling apparatus, for example, but not limited to, a fin-fan cooler or a cooling heat exchanger. If the cooling apparatus produces any noncondensables (for example light hydrocarbons, oil and/or water), they may, optionally, be oxidized, for example, by heating with one or more burners, directly or indirectly, or in a thermal oxidizer. Optionally oil from the liquid/solid separator may be further treated in another liquid/solid separation apparatus, including, but not limited to, a slant bed coalescing liquid separator that produces oil, water and sludge outputs. In other embodiments, any condensed stream is stored and/or recycled within the system or is disposed of. Sterile material from the dryer may, if desired, be re-hydrated and/or discharged overboard from an offshore rig. Alternatively, the sterile material may be shipped from a rig.

The condenser subsystem processes the exhaust gas stream produced by heating and volatilizing of the material in the heater dryer and by separation by the dual component separator. The dual component separator removes fines such as dust and other fine particulates from a stream flowing from the thermal treatment system to the oil/water separator to prevent such particulates from remaining in an oil stream produced by the oil/water separator and/or from an exhaust stream, producing a clean discharge. A suitable typical blower or air mover may be used to pull the stream from the heater dryer to the dual component separator, and/or to the other component(s) and separator(s). Recovered water may, in accordance with the present invention, be used, for example, for re-hydration of cuttings or added to the drilling fluid. Recovered oil may be used to fire burners, or as a mud additive. Recovered diesel may be used to fire the heater dryer. Any oil separator may have an exhaust that is fed to a burner and/or to an exhaust stack.

In one embodiment, a cuttings treatment system in accordance with the present invention removes hydrocarbon contaminates ranging from fuel oils/short chain hydrocarbons to heavy oils/long chain hydrocarbons. The system, in one aspect, uses a stainless steel heater dryer shell (or drum) with higher material discharge temperatures. The equipment can process a wide range of material sizes from clay to 8cm (3") rock, The throughput capacity range of one embodiment is from 13 tons per hour (TPH) to 15 TPH depending on drum size. In certain aspects drum size ranges between four and nine feet in diameter.

Contaminated materials including cuttings and soil are, in at least certain aspects, weighed, and placed into a holding hopper equipped with a variable speed feeder which meters the material into an auger which transports the material to a rotary dryer. The dryer unit, in one aspect, dries and heats the contaminated material indirectly so that hot gases and/or flames do not come in contact with it or with the hydrocarbon/water gas stream. Optionally any oil or diesel is filtered before it is burned. Temperature is increased to vapourize the water and hydrocarbons in the material; also a relatively small portion may be burned off. The water and hydrocarbon stream is treated by a dual component separator to remove undesirable particulates and a resulting vapour/gas stream is then, optionally quenched (using any known quench system or method or an adiabatic quench system in accordance with the present invention) and then fed to a condenser for cooling from which, optionally, it is fed to cooling apparatus(es) to lower its temperature. The condenser produces a liquid stream of water and hydrocarbons (for example but not limited to, oil). This stream is fed to oil/water separator(s) that produces stream(s) of hydrocarbons and of water. The water may be re-used in the system. Further air pollution control can, optionally, be added such as HEPA filters and acid gas scrubbers and/or contaminants may be removed with a thermal oxidizer.

To effect vapourization of the water and hydrocarbons from the material while in the dryer, the material is heated to temperatures required to vapourize those water and hydrocarbon constituents, These temperatures are typically between 150°C (300°F) and 480°C (900°F). Material leaving the dryer is, optionally, mixed with water for cooling and added moisture.

Either indirect or direct fired dryers may be used. The use of indirect dryers (vs. direct convection type dryers) allow for higher hydrocarbon contamination in the material to be treated. Some convection dryers have operational limits between 3% and 5% hydrocarbon contamination in the material to be treated. Also, some indirect dryers do not combine the dryer burner byproduct of combustion gas with steam and sweep gas, reducing the size of the condensing and particulate collection equipment.

In both stationary and portable recycling systems according to certain embodiments of the present invention hydrocarbon contaminates and water in material in a rotary dryer is treated at temperatures between 150°C (300°F) and 480°C (900°F). The hydrocarbons and water are driven off and condensed. Material is discharged as remediated from the dryer. The level of residual hydrocarbon contamination in the material after such remediation is typically in the range of 0 - 10,000 ppm. Cleaned material and soils are then recycled in numerous ways: re-use in original product, back-fill at the site of origin, reclaiming soil or coal pits, general clean fill, crushed soil sales, asphalt mix sales, concrete mix sales, or cover in a sanitary landfill.

In one aspect, a soil recycling facility has on-site laboratory equipment to validate that the soils are properly remediated along with proper storage arrangements for the materials awaiting processing. A remediation plant in accordance with the present invention may include: material holding hoppers, material handling conveyors and equipment, rotary dryer(s), soil conditioner(s) (adding water), heat exchanger(s), oil/water treatment(s), particulate separation and collection, and controls. Advantages of such systems include: remediation and recycling of the soil; removal and recycling of hydrocarbons; high levels of hydrocarbon removal and state-of-the-art pollution control; reliable and cost effective option to landfill disposal; reuse of the remediated soil, water, and hydrocarbons in a variety of ways; certification of remediation of hydrocarbon contaminated soils; ability to process a wide variety of types of cuttings, soils and hydrocarbons; maintenance of the ambient air quality standards.

High moisture (water) in contaminated soil is considered to be between 15% and 25% moisture by volume in the soil to be remediated. A 1.8m (6') diameter dryer can run between 3 and 6 tons per hour contaminated soil. A 2.75m (9') diameter dryer can run between 12 and 15 tons per hour. Actual production depends on such variables as the specific heat of the soil, elevation of the plant, and the amount of moisture to be removed.

Systems in accordance with the present invention may be affected by state and country permit criteria. Maximum volumes of criteria pollutants from portable or stationary systems allowed by individual states and county air regulators affect the size of the dryer. Acid such as sulfur oxide output from the stack may require a switch to low sulfur primary fuel and/or addition of a packed tower. Particulate collection beyond .04 GSCF may require HEPA filters. Liquid or vapour carbon collection for water and gas may be required.

In certain particular aspects of systems and methods in accordance with the present invention, to inhibit or prevent the formation of the condensation of oil, etc. on walls and parts of a dual component separator, the separator is encased with insulating material (for example fiberglass, ceramic fiber, cellulose, etc.) and hot air (for example, at least 300 to 900 degrees F.; for example heat from the thermal oxidizer's stack) is injected into a space between the exterior of the dual component apparatus and the interior of the insulation to maintain the temperature of the interior of the dual component system above the dew point of material being fed into the dual component separator to inhibit or prevent condensation within the separator. In one aspect a housing or enclosure is provided around the dual component separator and the insulation is installed in the housing or enclosure. Instead of or in addition to using insulating material and/or hot air, recirculating material can be heated by a separate burner or burners.

In one particular embodiment, a rotary dryer in accordance with the present invention has an outer shell or case which internally is divided by a wall into two interior chambers. Temperature in each chamber can be controlled providing dual evaporating temperatures. This permits control over the vapourization process and more even heating of the drum and inhibits or prevents overheating of the hot end of the drum while attempting to get the cold end hot. Burners and/or fireboxes may be provided like any of those disclosed in the prior art or, in accordance with the present invention, one or more burners are provided, either in separate fireboxes (as require by U.S. Patent 5,927,970 - which separate fireboxes are not the legal equivalent of burners mounted within the dryer shell or case, burners not in separate fireboxes; said patent incorporated fully herein for all purposes) or within the shell of the dryer; at one or at both ends of the shell or case. This can reduce or eliminate hot spots and flame impingement on the drum.

Certain quench systems in accordance with the present invention operate nearly adiabatically or adiabatically. This is advantageous because the system enthalpy remains constant. These methods can employ the heat of vapourization of sprayed liquid to reduce the temperature of the input vapour stream. Such systems employing water as a quench fluid are not the legal equivalent of prior art systems that use a hydrocarbon liquid as a quench fluid, including but not limited to, hydrocarbon quench systems as in U.S. Patents 6,120,654; 6,120,650: and 5,736,031

Non-hydxocarbon based quench apparatus may be used, such as water sprays. Using the quench apparatus may be carried out so that it is an adiabatic (or nearly adiabatic) process.

For a better understanding of the present invention, reference will now be made, by way of example to the accompanying drawings, in which:
Figure 1A is a schematic plan view of a system in accordance with the present invention;
Figure 1B is a schematic view of a side of part of the system shown in Figure 1A;
Figure 2A is a front view of a weir tank used in the system shown in Figure 1A;
Figure 2B is an end view of the weir tank shown in Figure 2A and an end view of an oil/water separator;
Figure 2C is a rear view of the weir tank shown in Figure 2A;
Figure 2D is a schematic plan view of the weir tank shown in Figure 2A;
Figure 2E is a side cross-sectional schematic view of the weir tank shown in Figure 2A; and
Figures 3A to 3D fit together in a pattern as indicated in Figure 3 to form a schematic view of a system in accordance with the present invention.

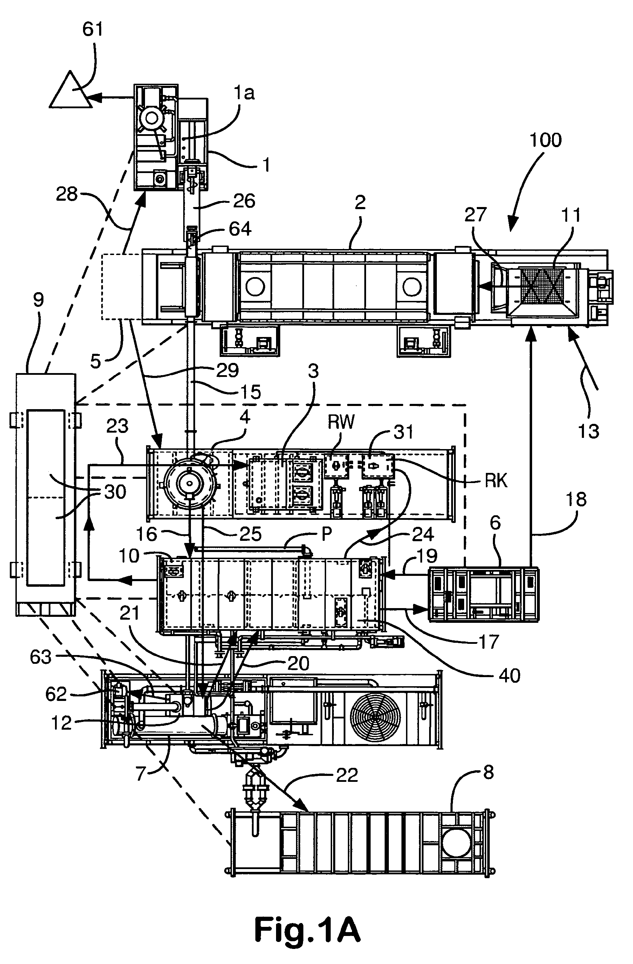

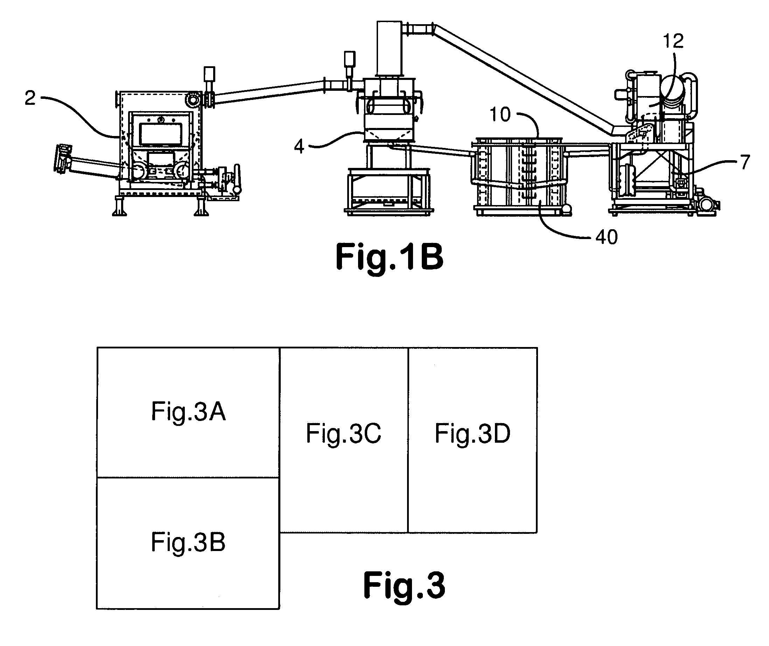

Figures 1A and 1B show a system 100 in accordance with the present invention which has a mill 1; a dryer 2; an oil/water separator 3; a quench system 4; optionally, a baghouse system 5; a condenser system 7; a thermal oxidizer system 8; a scrubber system 12; and a control room 9. Dotted lines from the control room 9 indicate communication between one, two, or more control systems 30 and each component of the system 100. The control room 9 contains appropriate control apparatuses and devices for controlling and selectively activating and deactivating each component, apparatus, and device of the system 100; including, but not limited to, switches, starters, overload protectors, alarms, monitors, and variable frequency drives.

An input stream 13 of material, for example contaminated soil, material contaminated with chemicals and/or hydrocarbons, or drilling materials (for example drilling fluid, debris, and/or drilled cuttings) is introduced to a feed system 11, for example, but not limited to, a "grizzly" vibrating grid system for removing large pieces (for example over 5.1cm (2"), over 7.6cm (3"), or over 10.2cm (4") in largest dimension) of material and an auger or other transport apparatus for conveying material from the feed system 11 to the dryer 2. The feed system 11 produces a material stream 27. A solids stream 26 from the dryer 2 (for example 5,490 kg/hr (12,100 lbs/hr) at 360°C (675°F)) is fed to the mill 1 (for example a pugmill) which mills and, if needed, rehydrates the milled material and discharges it, for example to a pit 61. Rehydration can be accomplished-using a spray system 1a (for example spraying about 23 litres per minute (6 GPM)) in the mill 1. The stream 27 (for example a stream of drilling material from which pieces over 10.2cm (4") have been removed) is fed to the dryer 2 (for example any dryer or thermal treatment system disclosed herein). A stream of material from the dryer 2 is fed directly to a quench system or, optionally, to a baghouse system 5 which produces a solids stream 28 that is fed to the mill system 1 and a vapour stream 29 from which the baghouse system has removed particles (for example fine particles). Alternatively, the stream 29 flows from the dryer 2 (for example at about 430°C (800°F)) without going through a baghouse system directly to the quench system 4 (and such a stream 29 has entrained within it particles which could have been removed by a baghouse system). Solids in the solids stream 26 are conveyed from the dryer 2 or baghouse filter 5 by rotating an auger in an auger system 64 (which may include multiple augers) to the mill system 1 and/or rehydration system 1a.

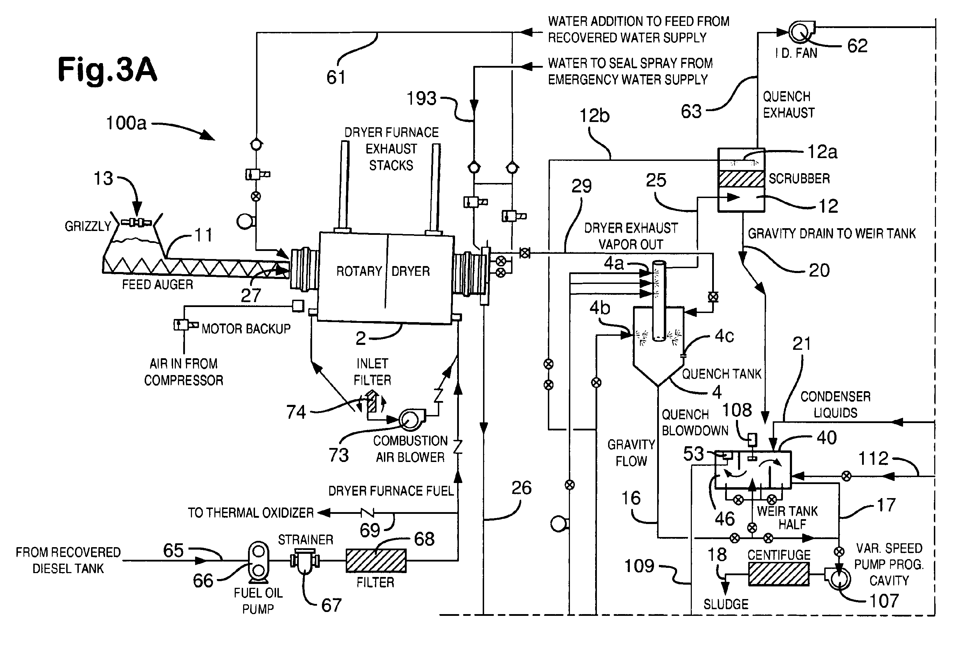

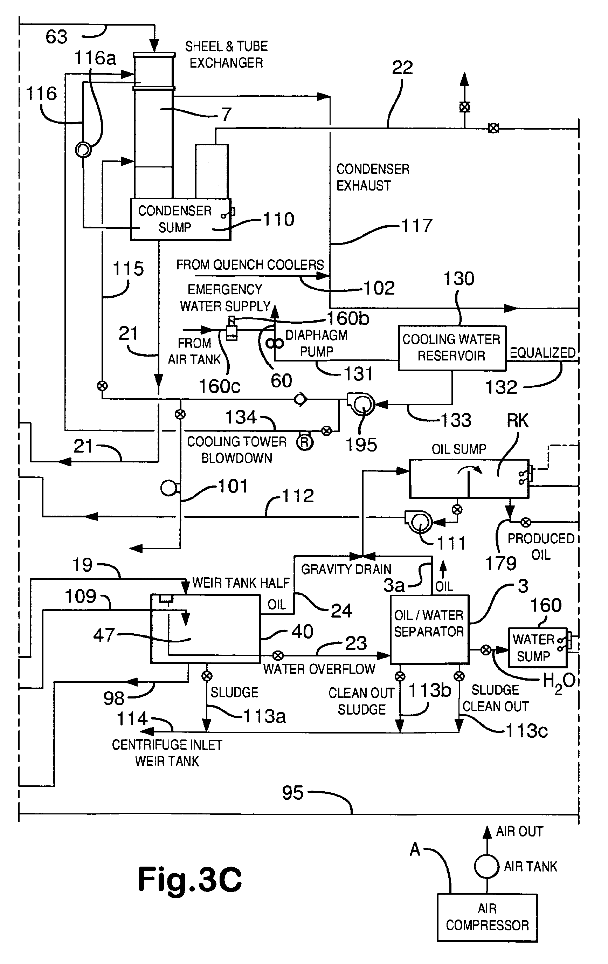

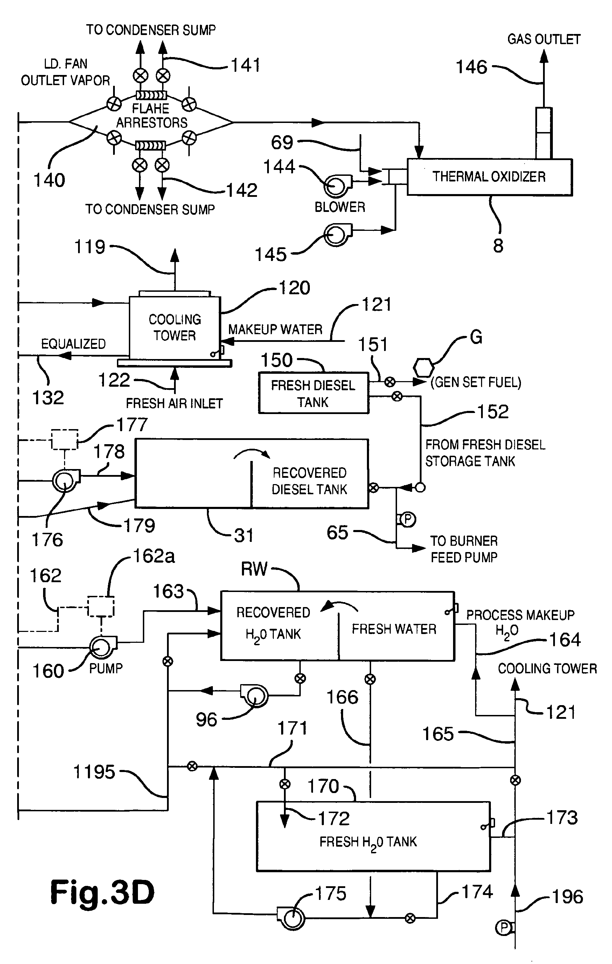

The quench system 4 produces a stream 25 which is fed to the scrubber system 12. Water, for example at about 190 litres per minute (50 GPM) is sprayed with sprays 12a supplied by a line 12b (as shown in Figure 3A). A fan 62 (or other air mover system) produces a suction pressure which moves the stream 25 to the scrubber system 12. The fan 62 also assists in moving the stream 29 and the pressure of vaporized liquids in the dryer 2 pushes material in the stream 29. The stream 25 (containing vapour and some fine particles) is treated in the scrubber system 12 producing a stream 63 that proceeds through the fan 62 to the condenser system 7 and produces a liquid/solids stream 20 that flows by gravity to a dirty side 46 of the weir tank system 10 as described in more detail below and a dirty stream 16 which flows to the dirty side 46 of a weir tank system 10. The quench system 4 communicates with the oil/water separator 3 which works in fluid communication with the recovered oil tank 31.

The weir tank system 10 produces output streams 23, 24, and 17. The stream 24 from the clean side 47 of the weir tank 40 (for example in one aspect about 10.5 litres per minute (2.8 GPM) at 55°C (130°F)) is relatively clean fluid (for example reusable oil) which can be re-used or returned to a customer. The stream 23 is a relatively clean liquid stream (for example an oil/water stream; for example 99% water, 1% oil) which is fed to the oil/water separator 3 for processing thereby. An internal stream 109 (primarily water) flows from the dirty side 46 to the clean side 47. The stream 17 is sucked by the centrifuge system 6 (for example in one aspect at about 150 GPM) after flowing off of the top from the dirty side 46 of a weir tank 40 (see description below) for processing by the centrifuge system 6. The centrifuge system 6 (which may have any suitable known centrifuge or centrifuges, for example, but not limited to, Model 3400 commercially available from Brandt/Varco) produces the stream 18 (for example at about 0.4 litres per minute (0.1 GPM) which is primarily solids which is fed to the feed system 11; and a liquid stream 19 (primarily oil with some water) which is fed back into a "clean" side 47 of the weir tank 40.

The condenser 7 also feeds the primarily liquid stream 21 to the dirty side 46 of the weir tank 40 and the scrubber system 12 also feeds a primarily liquid stream 20 to the dirty side 46 of the weir tank 40. The scrubber system 12 is optional.

The quench system 4 sprays water, for example, in one aspect 1,140 litres per minute (300 gal/min) to knock solids out of the streams input into the quench system 4, i.e. into the material from the stream 29 (for example through sprays 4a, 4b, see Figure 3A). The oil/water separator 3 receives the stream 23 from the weir tank system 40 which is a liquid stream, for example a stream with water and oil, and/or water and hydrocarbons. Recovered oil flows in a line 3a (for example at about 0.4 litres per minute (0.1 GPM, at 55°C (130°F)) from the oil/water separator 3 to the tank RK. The quench system 4 produces a stream 16 (with liquids and solids in it; for example in one aspect at about 1,140 litres per minute (300 gal/min)) which is fed (via gravity flow) in a pipe P to a dirty side 46 of the weir tank system 10 (or, alternately, in line 17).

The condenser 7 produces a vapour stream 22 which is fed to the thermal oxidizer system 8. In one aspect when treating drilling material, the stream 22 contains chemicals that are relatively difficult to condense, for example, light end hydrocarbons (for example benzene) which can be burned in the thermal oxidizer (which can vent to atmosphere).

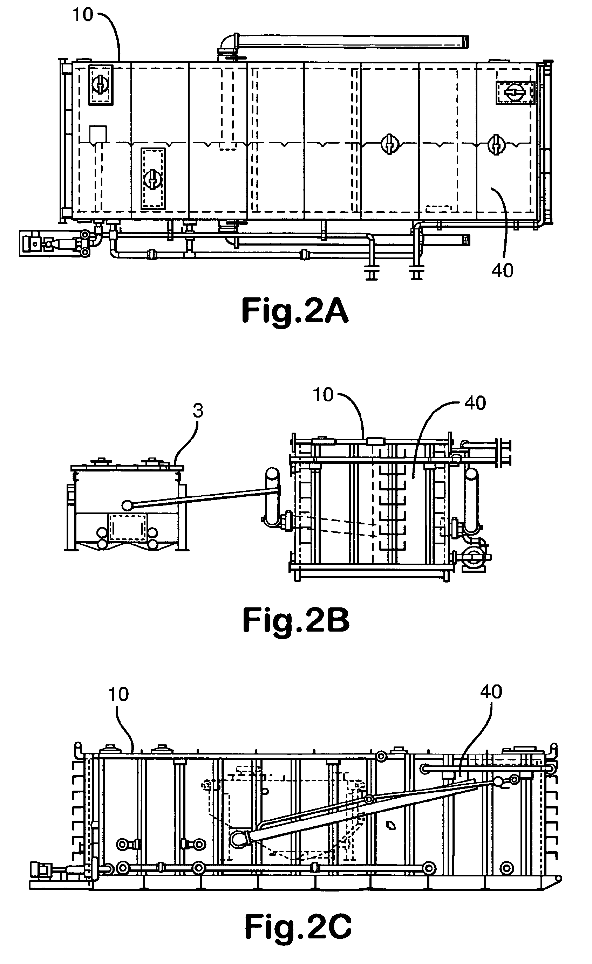

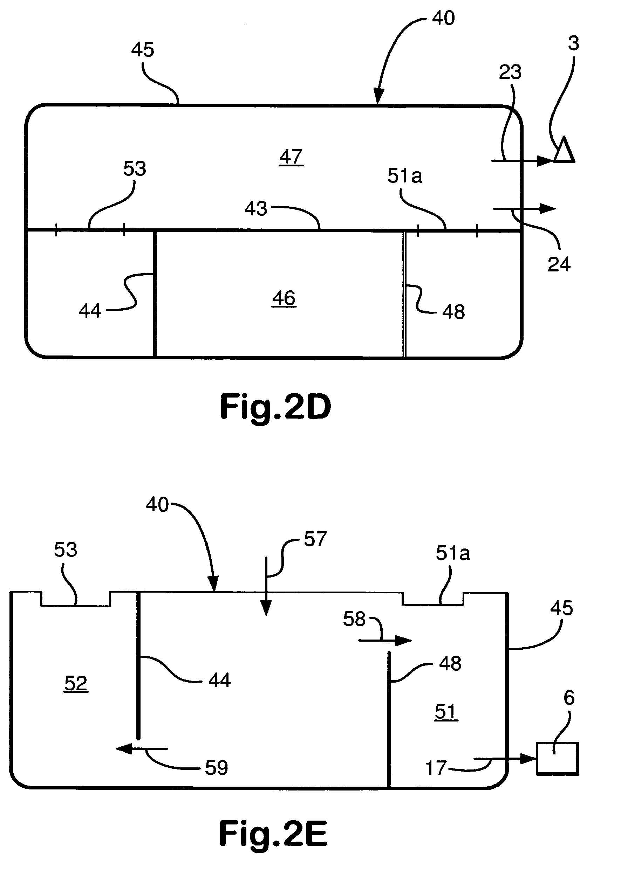

Figures 2D and 2E illustrate one embodiment of a weir tank 40 for the weir tank system 10. An enclosure 45 (four outer walls and a floor) is divided by a wall 43 into a dirty side 46 and a clean side 47. The dirty side 46 has an "under" weir 44 and an "over" weir 48. Material 57 (for example streams 16, 20, 21) is input between the under weir 44 and the over weir 48. Oil and oil-laden solids 58 rise to the top of the liquid between the under weir 44 and the over weir 48. This oil, etc. flows over the over weir 48 into a compartment 51 from which the centrifuge system 6 the material (for example in a stream 17 which contains solids and liquid). Oil flows over an oil over weir 51a into the clean side 47. The weir tank 40 may, optionally, have a removable lid. Preferably, weir 51a is higher than the weir 48, allowing oil laden solids to sink.

Liquid 59, for example water, and/or some oil, flows under the under weir 48 into a compartment 52. This fluid then flows through an upper weir 53 (stream 109) into the clean side 47 of the enclosure 45. A stream 24 (for example a stream of oil or diesel) off the top of material in the clean side 47 flows from the clean side 47 to a tank RK and/or tank 31 for re-use. Water recovered by the oil/water separator 3 is fed to a recovered water tank RW for re-use and/or discharge.

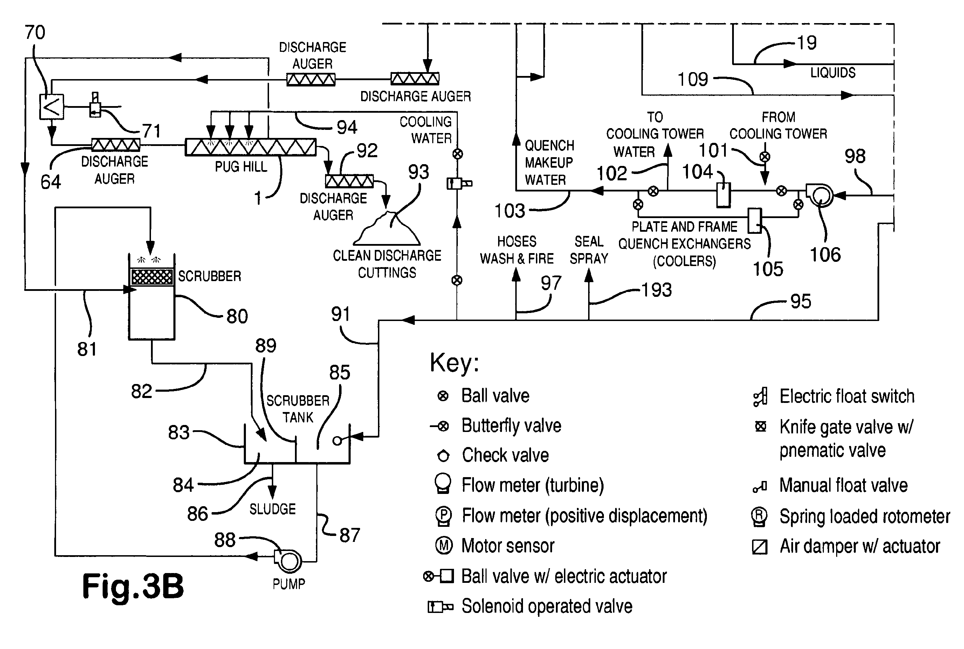

Figures 3A and 3B present a variation 100a of the system 100 (Figure 1A) and like numerals indicate like parts. In one particular aspect 8 metric tons per hour of material, for example drilling material with drilling fluid to be recovered and drilled cuttings to be separated and discharged, flows in the line 13 to the system 11.

As needed, water from the tank RW is supplied in a line 61 to the dryer 2. As needed, water from an emergency water supply 60 is provided in a line 193 to a spray for an outlet seal of the dryer 2.

Combustion air for the dryer 2 is provided by a blower system 73 with a filter 74. Fuel for the dryer 2 from the recovered oil tank 31 flows in a line 65, pumped by a pump 66, through a strainer 67 and a filter 68, to the dryer 2, for example at about 15 litres per minute (4 GPM). Fuel for the thermal oxidizer flows in a line 69. A valve 70 (for example an air-operated commercially-available double tipping air lock valve) controlled by a solenoid operated valve 71 controls flow in the line 26 and inhibits the passage of air back into the system while permitting the flow of solids.

Material (for example steam with contaminants) in a line 81 from the mill 1 flows to a scrubber 80 which "knocks down" (condenses) the steam producing a stream 82 which is predominantly water which flows (for example at about 190 litres per minute (50 GPM)) to a side 84 of a tank 83 which is divided by a wall 89. Solids ("SLUDGE") flow from the tank's side 84 in a line 86 and water flows from a tank side 85 in a line 87 (for example at about 190 litres per minute (50 GPM)), pumped by a pump 88 back to the scrubber 80 for additional cleaning. As needed, additional water (for example at about 16 litres per minute (4.3 GPM)) is provided to the tank side 85 in the line 91 (pumped by a pump 96). The scrubber 80 can reduce the amount of dust produced by the mill 1 and inhibit its release to the atmosphere.

A mill discharge auger 92 conveys discharged material 93, for example, drilled cuttings at about 66°C (150°F), from the mill 1. The lines 92, 62 and a line 94 supplying the sprays 1a receive water from a line 95 into which water is pumped from tank RW by a pump 96. As needed, for example for washing system components or to fight fires, water is provided in a line 97. Cooled water for the quench system 4 is provided in a line 103 (for example 1140 litres per minute (300 GPM) at 49°C (120°F)) to the sprays 4a and 4b. In one aspect there are three sprays 4a (total spray about 227 litres per minute (60 GPM)) and six sprays 4b in a ring around the quench vessel 4c (total spray about 910 litres per minute (240 GPM)). Two sets of sprays provide redundancy in the event one set or part thereof clogs or ceases operation. A pump 106 pumps water for the line 103 from the clean side 47 of the weir tank 40 through heat exchangers 104 and 105. Circulating water from the cooling tower 120 is provided to these heat exchangers via lines 101, 102.

A pump 107 pumps fluid in the line 17 from the dirty side 46 of the weir tank 40 to the centrifuge system 6. A pump 108 (for example an induced air pump) puts small bubbles into the material in the weir tank 40 to promote oil flotation. Water in the line 109 may have some oil in it.

Optionally, to treat condensed oil and/or heavy oil from the oil sump RK, a pump 111 pumps the material in a line 112 (for example at 4-8 litres per minute (1 - 2 GPM)) to the dirty side of the weir tank 40 for flow from there to the centrifuge system 6. Fluid with particles in it from lines 113a - 113c flows in a line 114 to the dirty side 46 of the weir tank 40 for flow to the centrifuge system 6.

A pump 195 pumps cooled water from the cooling reservoir 130 in a line 113 (for example at about 660 GPM and 85 F) to a line 134 near the top of the condenser system 7 and in a line 115 to a point lower down in the condenser system 107. Line 116 has a pressure gauge 116a to measure the differential pressure between two points on the condenser system 7 to provide an indication of plugging of the condenser system 7 if it occurs. Material from the condenser sump 110 at the bottom of the condenser system 7 flows in the line 21, for example by gravity, to the dirty side 46 of the weir tank 40. Fluid primarily water, flows in a line 117 (for example 2500 litres per minute (660 GPM) at 35°C (95°F)) to the cooling tower 120.

Water vapour exhausts from the cooling tower 120 in a line 119. Makeup water is provided to the cooling tower 120 in a line 121, for example from the tank 170. Fresh air from atmosphere enters the cooling tower 120 in a line 122. Cooled water flows, for example at about 660 GPM and at about 28°C (83°F), in a line 132 from the cooling tower 120 to the reservoir 130. Water for the emergency water supply 160 is provided in a line 131. The emergency water supply has a pump 160a; and a valve 160b which controls air in an air inlet line 160c from an air compressor system A. In one aspect the bulk of water sprayed into the condenser system 7 is conveyed through the line 115.

The stream 22 (with uncondensed gases therein for example air, nitrogen, ethane, and/or methane; for example at 37°C (99°F)) from the condenser system 7 flows through a flame arrestor system 140. Condensate from the flame arrestor system 140 flows in lines 141, 142 to the condenser sump 110. Blowers 144 and 145 provide combustion air and makeup air for the thermal oxidizer 8. Products of combustion (for example carbon dioxide, oxygen, and/or gases) are exhausted through an outlet 146.

A tank system 150 provides fresh diesel fuel to the system 100a, in a line 152 to the recovered diesel tank 31 and in a line 151 to a generator system G which produces electricity for the system 100a. Line 65 provides fuel to the dryer 2.

Water from the oil/water separator system 3 is collected in a sump 160 and pumped from it by a pump 161 in a line 163 to the tank RW. A float switch 162a in a line 162 selectively turns the pump 161 on and off to prevent overflow of the sump 160. Fresh water is input into the tank 170 in lines 196, 173 and is provided in lines 165, 121 to the cooling tower 120 and in lines 165, 164 to the tank RW. A pump 175 pumps water in a line 166 from the tank RW and in a line 174 from the tank 170 to the line 95 and, as desired, in lines 171, 172 into the tank 170.

Optionally, produced oil flows by gravity in a line 79 from the tank RK to the tank 31.

The present invention, therefore, provides, in at least some embodiments, methods for treating material, the material including a first liquid component and solids, the methods in some aspects, including: introducing material including a first liquid component and solids to a system for remediation, the system including a thermal treatment system, a quench system, a weir tank system and a condensing system; feeding a liquid slurry of the material to the thermal treatment system and heating the liquid slurry therein producing heated discharge solids and a discharge stream with the first liquid component and solids therein; discharging the heated discharge solids from the thermal treatment system; feeding the discharge stream to a quench system; cooling the discharge stream in the quench system producing a cooled discharge stream; feeding the cooled discharge stream to the weir tank system, the weir tank system having a clean side and a dirty side, the cooled discharge stream fed to the dirty side of the weir tank system; and from the dirty side of the weir tank system producing a stream with solids therein, and from the clean side of the weir tank system producing a cleaned stream of the first liquid component.

## Claims

1. A method for premediating drilled cuttings material comprising solids, oil, and water, the method comprising the steps of feeding the drilled cuttings material (13) into a thermal treatment apparatus (2) and heating the drilled cuttings material therein to produce heated solids (26,28) and a stream (29) with oil, water and solids therein, discharging the heated cuttings from the thermal treatment apparatus (2), feeding the stream to a quench apparatus (4) to cool said stream (29) producing a cooled stream (16,25), **characterised in that** the method further comprises the step of feeding the cooled stream (16,20,25) to a weir tank (40) and producing with the weir tank (40) a first cleaned stream with oil (24) therein and a dirty stream (17) with liquid and solids therein, the weir tank (40) also produces a second cleaned stream (23) with water and oil therein, wherein the weir tank (40) comprises a tank (45) with a wall (43) dividing the tank (40) into a clean side (47) and a dirty side (46), the dirty side (46) divided into a first input compartment (57), a second compartment (51), and a third compartment (52), a first over weir (58) for allowing oil from the cooled stream to flow over from the first input compartment (57) into the second compartment (51) and a second over weir (51a) to allow oil to flow from the second compartment (51) into the clean side (47), an under weir (59) for allowing water to flow from the first compartment (57) to the third compartment (52) and a third over weir (53) to allow water from the third compartment (52) to flow into the clean side (47).

2. A method in accordance with Claim 1, wherein the second cleaned stream (23) is feed into a separator apparatus (3) for separating the oil and the water into an oil stream and a water stream.

3. A method in accordance with Claim 2, wherein the separator apparatus (3) comprises a settling tank.

4. A method in accordance with any of Claims 1 to 3, the method further comprising the steps of recovering oil from the clean side (47) of the weir tank (40) and recovering water from the clean side (47) of the weir tank (40).

5. A method in accordance with Claim 4, wherein the oil is recovered from the clean side (47) by allowing a stream of oil to flow from a top portion of the clean side (47) of the weir tank (40).

6. A method in accordance with Claim 4 or 5, wherein the water is recovered from the clean side (47) by allowing a stream of oil to flow from a bottom portion of the clean side (47) of the weir tank (40).

7. A method in accordance with any preceding claim, further comprising the step of allowing a stream with solids oil and some water and from the second compartment (51) to centrifuge apparatus (6) for further processing.

8. A method in accordance with Claim 7, wherein an outlet is provided in the bottom portion of the second compartment to allow a stream of solids oil and some water to the centrifuge apparatus (6).

9. A method in accordance with Claim 7 or 8, the method further comprising the step of producing a first centrifuge stream with the centrifuge apparatus (6), the first centrifuge stream containing solids, and feeding the first centrifuge stream to the thermal treatment apparatus (2) for further processing therein.

10. A method in accordance with any preceding claim, wherein the method further comprises the step of obtaining an uncondensed vapour stream (25) from the quench apparatus (4), feeding the uncondensed quenched vapour stream (25) from the quench apparatus (4) to a condense apparatus (7), said uncondensed quenched vapour stream (25) containing solids, condensing at least part of said uncondensed quenched vapour stream (25) producing a condensed stream (20), and feeding said condensed stream (20) to the dirty side (46) of the weir tank (40).

11. A method in accordance with Claim 10, wherein the method further comprises the step of feeding the uncondensed quenched vapour stream (25) into a scrubber apparatus (12) to remove at least some solids prior to feeding the uncondensed quenched vapour stream (25) to the condenser apparatus (7).

12. A method in accordance with Claim 10 or 11, wherein the method further comprises the step of providing a cooling apparatus (130,134) to provide cooling fluid for cooling the condenser (7) to enhance effectiveness of the condenser.

13. A method in accordance with any of Claims 10 to 12, further comprising the step of producing a stream (22) of uncondensed gases with the condenser (7), and oxidizing said stream (22) of uncondensed gases.

14. A method in accordance with Claim 13, wherein the step of oxidizing said stream (22) of uncondensed gases is carried out in a thermal oxidizer (8).

15. A method in accordance with any preceding claim, wherein the thermal treatment apparatus (2) comprises a vessel with an interior wall dividing the vessel into two intercommunicating chambers, the vessel having two spaced-apart ends and a burner at each end for heating drilled cuttings material in each chamber, the method comprising the step of passing the drilled cuttings material through said two interconnecting chambers,

16. A method in accordance with Claim 15, wherein each burner is in a separate firebox adjacent each chamber, the method further comprising the step of igniting each burner in each firebox.

17. A method in accordance with any preceding claim, prior to feeding the drilled cuttings material to the thermal treatment apparatus (2), the drilled cuttings material is feed in to a separator apparatus (11) the method further comprising the steps of separating large pieces of material from the drilled cuttings material with the separator apparatus (11), and then feeding the drilled cuttings material with said large pieces removed to the thermal treatment apparatus (2).

18. A method in accordance with any preceding claim, wherein the drilled cuttings material (13) is in the form of a slurry.

19. A method in accordance with Claim 18, wherein the slurry contains by volume a mixture of up to about 25% oil, up to about 25% water, and up to about 50% drilled cuttings.

20. A method in accordance with Claim 19, wherein the slurry contains by volume a mixture of up to about 5% oil, up to about 5% water, and up to about 90% drilled cuttings.

21. A method in accordance with any preceding claim, wherein at least about 8 tons per hour of drilled cuttings material is processed per hour.

22. A method in accordance with any preceding claim, wherein the drilled cuttings material comprises contaminants including hydrocarbon contaminants, the method further comprising the step of volatilizing the hydrocarbons contaminants in the thermal treatment apparatus.

23. A method in accordance with any preceding claim, further comprising the step of rehydrating discharged heated solids (28) from the thermal treatment appartus (2) with the rehydration apparatus (1) to facilitate handling of the heated cuttings.

24. A method in accordance with any preceding claim, further comprising the step of milling the discharged heated solids (26,28).

25. A method in accordance with Claim 24, wherein the step of milling is carried out by a pug mill.

26. A method in accordance with any preceding claim, wherein the quench apparatus (4) comprises a quench vessel and at least one water spray (4a,4b), the method further comprising the step of spraying cooling water with the at least one water spray (4a, 4b) into the discharge stream (25) to produce the cooled discharge stream (29).

27. A method in accordance with any preceding claim, wherein the drilled cuttings material further comprises other contaminants.

28. An apparatus for remediating drilled cuttings material, the apparatus comprising a thermal treatment apparatus (2), a quench apparatus (4), **characterised in that** the apparatus further comprises a weir tank apparatus (40) the weir tank apparatus (40) comprising a tank (45) with a wall (43) dividing the tank (45) into a clean side (47) and a dirty side (46) the dirty side (46) is divided into a first input compartment (57), a second compartment (51), and a third compartment (52), a first over weir (58) for allowing oil from the cooled stream to flow over from the first input compartment (57) into the second compartment (51) and a second over weir (51a) to allow oil to flow from the second compartment (51) into the clean side (47), an under weir (59) for allowing water to flow from the first compartment (57) to the third compartment (52) and a third over weir (53) to allow water from the third compartment (52) to flow into the clean side (47).

## Patentansprüche

1. Verfahren zum Beseitigen von Bohrschnittmaterial, das Feststoffe, Öl und Wasser enthält, wobei das Verfahren die folgenden Schritte umfasst,: Befördern des Bohrschnittmaterials (13) in eine Wärmebehandlungsvorrichtung (2) und Erhitzen des Hohrschnittmaterials darin, um darin erwärmte Feststoffe (26, 28) und einen Strom (29) mit Öl, Wasser und Feststoffen zu erzeugen, Abführen des erwärmten Schnittmaterials aus der Wärmebehandlungsvorrichtung (2), Befördern des Stroms zu einer Abschreckvorrichtung (4), um den Strom (29) zu kühlen und um einen gekühlten Strom (16, 25) zu erzeugen, **dadurch gekennzeichnet, dass** das Verfahren ferner den Schritt umfasst, bei dem der gekühlte Strom (16, 20, 25) zu einem Wehrbehälter (40) befördert wird und ein erster gereinigter Strom mit darin vorhandenem Öl (24) und ein Schmutzstrom (17) mit darin vorhandener Flüssigkeit und darin vorhandenen Feststoffen mittels des Wehrbehälters (40) erzeugt werden, wobei der Wehrbehälter (40) außerdem einen zweiten gereinigten Strom (23) mit darin vorhandenem Wasser und Öl erzeugt, wobei der Wehrbehälter (40) einen Tank (45) mit einer Wand (43), die den Tank (40) in eine saubere Seite (47) und eine schmutzige Seite (46) unterteilt, wobei die schmutzige Seite (46) in ein erstes Einlassfach (57), ein zweites Fach (51) und ein drittes Fach (52) unterteilt ist, ein erstes Überlaufwehr (58), um zuzulassen, dass Öl von dem gekühlten Strom von dem ersten Einlassfach (57) in das zweite Fach (51) überläuft, ein zweites Überlaufwehr (51 a), um zuzulassen, das Öl von dem zweiten Fach (51) in die saubere Seite (47) fließt, ein Unterlaufwehr (59), um zuzulassen, dass Wasser von dem ersten Fach (57) in das dritte Fach (52) fließt, und ein drittes Überlaufwehr (53), um zuzulassen, dass Wasser von dem dritten Fach (52) in die saubere Seite (47) fließt, aufweist.

2. Verfahren nach Anspruch 1, wobei der zweite gereinigte Strom (23) in eine Trennvorrichtung (3) befördert wird, um das Öl und das Wasser in einen Ölstrom und einen Wasserstrom zu trennen.

3. Verfahren nach Anspruch 2, wobei die Trennvorrichtung (3) einen Absetztank umfasst.

4. Verfahren nach einem der Ansprüche 1 bis 3, wobei das Verfahren ferner die Schritte des Wiedergewinnens von Öl von der sauberen Seite (47) des Wehrbehälters (40) und des Wiedergewinnens von Wasser von der sauberen Seite (47) des Wehrbehälters (40) umfasst.

5. Verfahren nach Anspruch 4, wobei das Öl von der sauberen Seite (47) **dadurch** wiedergewonnen wird, dass einem Ölstrom ermöglicht wird, von einem oberen Abschnitt der sauberen Seite (47) des Wehrbehälters (40) abzufließen.

6. Verfahren nach Anspruch 4 oder 5, wobei das Wasser von der sauberen Seite (47) **dadurch** wiedergewonnen wird, dass einem Ölstrom erlaubt wird, von einem unteren Abschnitt der sauberen Seite (47) des Wehrbehälters (40) abzufließen.

7. Verfahren nach einem vorhergehenden Anspruch, das ferner den Schritt umfasst, bei dem einem Strom mit Feststoffen, Öl und etwas Wasser erlaubt wird, von dem zweiten Fach (51) zu einer Zentrifugenvorrichtung (6) für eine weitere Verarbeitung abzufließen.

8. Verfahren nach Anspruch 7, wobei ein Auslass im Bodenabschnitt des zweiten Fachs vorgesehen ist, um einen Strom aus Feststoffen, Öl und etwas Wasser zu der Zentrifugenvorrichtung (6) zuzulassen.

9. Verfahren nach Anspruch 7 oder 8, wobei das Verfahren ferner den Schritt des Erzeugens eines ersten Zentrifugenstroms mit der Zentrifugenvorrichtung (6), wobei der erste Zentrifugenstrom Feststoffe enthält, und des Beförderns des ersten Zentrifugenstroms zu der Wärmebehandlungsvorrichtung (2) für eine weitere Verarbeitung darin umfasst.

10. Verfahren nach einem vorhergehenden Anspruch, wobei das Verfahren ferner den Schritt des Erhaltcns eines nicht kondensierten Dampfstroms (25) von der Abschreckvorrichlung (4), des Beförderns des nicht kondensierten abgeschreckten Dampfstroms (25) von der Abschreckvorrichtung (4) zu einer Kondensatorvorrichtung (7), wobei der nicht kondensierte abgeschreckte Dampfstrom (25) Feststoffe enthält, des Kondensierens wenigstens eines Teils des nicht kondensierten abgeschreckten Dampfstroms (25), um einen kondensierten Strom (25) zu erzeugen, und des Beförderns des kondensierten Stroms (20) zu der schmutzigen Seite (46) des Wehrbehälters (40) umfasst.

11. Verfahren nach Anspruch 10, wobei das Verfahren ferner den Schritt des Beförderns des nicht kondensierten abgeschreckten Dampfstroms (25) in eine Gaswaschervorrichtung (12) umfasst, um wenigstens einen Teil der Feststoffe zu entfernen, bevor der nicht kondensierte abgeschreckte Dampfstrom (25) zu der Kondensatorvorrichtung (7) gefördert wird.

12. Verfahren nach Anspruch 10 oder 11, wobei das Verfahren ferner den Schritt des Vorsehens einer Kühlungsvorrichtung (130, 134) umfasst, um Kühlungsfluid vorzusehen, um den Kondensator (7) zu kühlen, um die Wirksamkeit des Kondensators zu erhöhen.

13. Verfahren nach einem der Anspruche 10 bis 12, das ferner den Schritt des Erzeugens eines Stroms (22) aus nicht kondensierten Gasen mittels des Kondensators (7) und des Oxidierens des Stroms (22) aus nicht kondensierten Gasen umfasst.

14. Verfahren nach Anspruch 13, wobei der Schritt des Oxidierens des Stroms (22) aus nicht kondensierten Gasen in einer thermischen Oxidationsvorrichtung (8) ausgeführt wird.

15. Verfahren nach einem vorhergehenden Anspruch, wobei die Wärmebehandlungsvorrichtung (2) ein Gefäß mit einer Innenwand umfasst, die das Gefäß in zwei miteinander verbundene Kammern unterteilt, wobei das Gefäß zwei voneinander beabstandete Enden und einen Brenner an jedem Ende besitzt, um Bohrschnittmaterial in jeder Kammer zu erhitzen, wobei das Verfahren den Schritt des Schickens des Bohrschnittmaterials durch die zwei miteinander verbundenen Kammern umfasst.

16. Verfahren nach Anspruch 15, wobei sich jeder Brenner in einem getrennten Feuerraum in der Nähe jeder Kammer befinde, wobei das Verfahren ferner den Schritt des Zündens jedes Brenners in jedem Feuerraum umfasst.

17. Verfahren nach einem vorhergehenden Anspruch, bei dem vor dem Befördern des Bohrschnittmaterials zu der Wärmebehandlungsvorrichtung (2) das Bohrschnittmaterial in eine Trennvorrichtung (11) befördert wird, wobei das Verfahren ferner die Schritte des Trennens großer Materialteile von dem Bohrschnittmaterial mit der Trennvorrichtung (11) und dann des Beförderns des Bohrschnittmaterials, aus dem die großen Teile entfernt worden sind, zu der Wärmebechandlungsvorrichtung (2) umfasst.

18. Verfahren nach einem vorhergehenden Anspruch, wobei das Bohrschnittmaterial (13) in Form von Brei vorliegt.

19. Verfahren nach Anspruch 18, wobei der Brei ein Gemisch von bis zu etwa 25 Vol.-% Öl, bis zu etwa 25 Vol.-% Wasser und bis zu etwa 50 Vol.-% Bohrschnitt enthält.

20. Verfahren nach Anspruch 19, wobei der Schlamm ein Gemisch aus bis zu etwa 5 Vol,-% Öl, bis zu etwa 5 Vol.-% Wasser und bis zu etwa 90 Vol.-% Bohrschnitt enthält.

21. Verfahren nach einem vorhergehenden Anspruch, wobei wenigstens etwa 8 Tonnen pro Stunde von Bohrschnittmaterial pro Stunde verarbeitet werden.

22. Verfahren nach einem vorhergehenden Anspruch, wobei das Bohrschnittmaterial Verunreinigungen enthält, die Kohlenwasserstoff-Verunreinigungen umfassen, wobei das Verfahren ferner den Schritt des Verdampfens der Kohlenwasserstoff-Verunreinigungen in der Wärmbehandlungsvorrichtung umfasst.

23. Verfahren nach einem vorhergehenden Anspruch, das ferner den Schritt des Rehydrierens von abgeführten erwärmten Feststoffen (28) aus der Wärmebehandlungsvorrichtung (2) mittels der Rehydrierungsvorrichtung (1) umfasst, um die Handhabung des erwärmten Schnittmaterials zu erleichtern.

24. Verfahren nach einem vorhergehenden Anspruch, das ferner den Schritt des Zerkleinerns der abgeführten erwärmten Feststoffe (26, 28) umfasst.

25. Verfahren nach Anspruch 24, wobei der Schritt des Zerkleinerns durch eine Lehmmühle ausgeführt wird.

26. Verfahren nach einem vorhergehenden Anspruch, wobei die Abschreckvorrichtung (4) ein Abschreckgefäß und wenigstens eine Wassersprüheinrichtung (4a, 4b) umfasst, wobei das Verfahren ferner den Schritt des Sprühens von Kühlwasser mit der wenigstens einen Wassersprühvorrichtung (4a, 4b) in den Abführstrom (25) umfasst, um den gekühlten Abrührstrom (29) zu erzeugen.

27. Verfahren nach einem vorhergehenden Anspruch, wobei das Bohrschnittmaterial ferner andere Verunreinigungen enthält.

28. Vorrichtung zum Beseitigen von Bohrschnittmaterial, wobei die Vorrichtung eine Wärmebehandlungsvorrichtung (2) und eine Abschreckvorrichtung (4) umfasst, **dadurch gekennzeichnet, dass** die Vorrichtung ferner eine Wehrbehältervorrichtung (40) umfasst, wobei die Wehrbehältervorrichtung (40) einen Tank (45) mit einer Wand (43), die den Tank (45) in eine saubere Seite (47) und eine schmutzige Seite (46) unterteilt, wobei die schmutzige Seite (46) in ein erstes Einlassfach (57), ein zweites Fach (51) und ein drittes Fach (52) unterteilt ist, ein erstes Überlaufwehr (58), um zuzulassen, dass Öl aus dem gekühlten Strom von dem ersten Einlassfach (57) in das zweite Fach (51) überläuft, ein zweites Überlaufwehr (51a), um zuzulassen, dass Öl von dem zweiten Fach (51) in die saubere Seite (47) fließt, ein Unterlaufwehr (59), um zuzulassen, dass Wasser von dem ersten Fach (57) zu dem dritten Fach (52) fließt, und ein drittes Überlaufwehr (53), um zuzulassen, dass Wasser von dem dritten Fach (52) in die saubere Seite (47) fließt, aufweist.

## Revendications

1. Procède pour traiter des déblais de forage comprenant des matières solides, du pétrole et de l'eau, le procédé comprenant les étapes consistant à fournir les déblais de forage (13) dans un dispositif de traitement thermique (2) et à y chauffer les déblais de forage en vue de produire des matières solides chaudes (26, 28) et un courant (29) comportant du pétrole, de l'eau et des matières solides, à évacuer les déblais chauffés du dispositif de traitement thermique (2), à fournir le courant à un dispositif de trempe (4) en vue de refroidir ledit courant (29) fournissant un courant refroidi (16, 25), **caractérisé en ce que** le procédé comprend, de plus, l'étape consistant à fournir le courant refroidi (16, 20, 25) à un réservoir à déversoir (40) et à produire avec le réservoir à déversoir (40) un premier courant propre comportant du pétrole (24) et un courant sale (17) comportant du liquide et des matières solides, le réservoir à déversoir (40) produit également un second courant propre (23) comportant de l'eau et du pétrole, dans lequel le réservoir à déversoir (40) comporte un réservoir (45) doté d'une paroi (13) divisant le réservoir (40) en un côté propre (47) et en un côté sale (46), le côté sale (46) étant divisé en un premier compartiment d'entrée (57), un deuxième compartiment (51) et un troisième compartiment (52), un premier déversoir supérieur (58) pour permettre au pétrole provenant du courant refroidi de déborder à partir du premier compartiment d'entrée (57) dans le deuxième compartiment (51) et un deuxième déversoir supérieur (51a) pour permettre au pétrole de déborder à partir du deuxième compartiment (51) dans le côté propre (47), un déversoir inférieur (59) pour permettre à l'eau de s'écouler à partir du premier compartiment (57) vers le troisième compartiment (52) et un troisième déversoir supérieur (53) pour permettre à l'eau sortant: du troisième compartiment (52) de s'écouler dans le côté propre (47).

2. Procédé selon la revendication 1, dans lequel le second courant propre (23) est fourni à un dispositif de séparation (3) pour séparer le pétrole et l'eau en un courant de pétrole et en un courant d'eau.

3. Procédé selon la revendication 2, dans lequel le dispositif de séparation (3) comporte un bac de clarification.

4. Procédé selon l'une quelconque des revendications 1 à 3, le procédé comprenant, de plus, les étapes consistant à récupérer du pétrole à partir du côté propre (47) du réservoir à déversoir (40) et à récupérer de l'eau à partir du côté propre (47) du réservoir à déversoir (40).

5. Procédé selon la revendication 4, dans lequel le pétrole est récupéré à partir du côté propre (47) en permettant à un courant de pétrole de s'écouler à partir d'une partie supérieure du côté propre (47) du réservoir à déversoir (40).

6. Procédé selon la revendication 4 ou 5, dans lequel l'eau est récupérée à partir du côté propre (17) en permettant à un courant de pétrole de s'écouler à partir d'une partie inférieure du côté propre (47) du réservoir à déversoir (40).

7. Procédé selon l'une quelconque des revendications précédentes, comprenant, de plus, l'étape consistant à permettre à un courant constitué de matières solides, de pétrole et d'un peu d'eau et provenant du deuxième compartiment (51) d'aller vers un dispositif de centrifugation (6) en vue d'un traitement ultérieur.

8. Procédé selon la revendication 7, dans lequel un orifice de sortie est prévu dans la partie inférieure du deuxième compartiment en vue de permettre à un courant constitué de matières solides, de pétrole et d'un peu d'eau d'aller vers le dispositif de centrifugation (6).

9. Procédé selon la revendication 7 ou 8, le procédé comprenant, de plus, l'étape consistant à produire un premier courant de centrifugation avec le dispositif de centrifugation (6), le premier courant de centrifugation contenant des matières solides, et à fournir le premier courant de centrifugation à un dispositif de traitement thermique (2) en vue d'un traitement ultérieur dans ce dispositif.

10. Procédé selon l'une quelconque des revendications précédentes, dans lequel le procédé comprend, de plus, l'étape consistant à obtenir un flux de vapeur non condensée (25) à partir du dispositif de trempe (4), à fournir le flux de vapeur de trempe non condensée (25) provenant du dispositif de trempe (4), à fournir le flux de vapeur de trempe non condensée provenant du dispositif de trempe à un dispositif de condensation (7), ledit flux de vapeur de trempe non condensée (25) contenant des matières solides, à condenser au moins une partie dudit flux de vapeur de trempe non condensée (2b) en produisant un flux condensé (20), et à fournir ledit flux condensé (20) au côté sale (46) du réservoir à déversoir (40).

11. Procédé selon la revendication 10, dans lequel le procédé comporte, de plus, l'étape consistant à fournir le flux de vapeur de trempe non condensée (25) dans un appareil de nettoyage (12) en vue d'éliminer au moins une partie des matières solides avant de fournir le flux de vapeur de trempe non condensée (25) au dispositif de condensation (7).

12. Procédé selon la revendication 10 ou 11, dans lequel le procédé comporte, de plus, l'étape consistant à fournir un dispositif de refroidissement (130, 134) pour fournir un fluide de refroidissement permettant de refroidir le dispositif de condensation (7) en vue d'augmenter l'efficacité du dispositif de condensation.

13. Procédé selon l'une quelconque des revendications 10 à 12, comprenant, de plus, l'étape consistant à produire un flux (22) de gaz non condensés avec le dispositif de condensation (7), et à oxyder ledit flux (22) de gaz non condensés.

14. Procédé selon la revendication 13, dans lequel l'étape consistant à oxyder ledit flux (22) de gaz non condensés est réalisée dans un dispositif d'oxydation thermique (8).

15. Procédé selon l'une quelconque des revendications précédentes, dans lequel le dispositif de traitement thermique (2) comprend une enceinte dotée d'une paroi intérieure séparant l'enceinte en deux chambres communiquant entre elles, l'enceinte comportant deux extrémités séparées et un brûleur au niveau de chaque extrémité pour chauffer les déblais de forage dans chaque chambre, le procédé comprenant l'étape consistant à faire passer les déblais de forage à travers les deux dites chambres en interconnexion.

16. Procédé selon la revendication 15, dans lequel chaque brûleur se trouve dans un foyer séparé adjacent à chaque chambre, le procédé comprenant, de plus, l'étape consistant à allumer chaque brûleur dans chaque foyer.

17. Procédé selon l'une quelconque des revendications précédentes, avant de fournir les déblais de forage au dispositif de traitement thermique (2), les déblais de forage sont fournis à un dispositif de séparation (11), le procédé comprenant, de plus, les étapes consistant à séparer les gros morceaux de matériaux provenant des déblais de forage avec le dispositif séparateur (11), et ensuite à fournir les déblais de forage débarrassés desdits gros morceaux au dispositif de traitement thermique (2).

18. Procédé selon l'une quelconque des revendication précédentes, dans lequel les déblais de forage (13) se présentent sous la forme d'une boue.

19. Procède selon la revendication 18, dans lequel la boue contient en volume un mélange allant jusqu'à 25 % environ de pétrole, jusqu'à 25% environ d'eau et jusqu'à 50% environ de déblais de forage.

20. Procédé selon la revendication 19, dans lequel la boue contient en volume un mélange allant jusqu'à 5% environ de pétrole, jusqu'à 5% environ d'eau et jusqu'à 90% environ de déblais de forage.

21. Procédé selon l'une quelconque des revendications précédentes, dans lequel au moins 8 tonnes environ de déblais de forage sont traitées par heure.

22. Procédé selon l'une quelconque des revendications précédentes, dans lequel les déblais de forage comportent des produits contaminants comprenant des contaminants à base d'hydrocarbure, le procédé comprenant, de plus, l'étape consistant à rendre volatiles les contaminants à base d'hydrocarbure dans le dispositif de traitement thermique.

23. Procédé selon l'une quelconque des revendications précédentes, comprenant, de plus, l'étape consistant à réhydrater les matières solides chaudes évacuées (28) du dispositif de traitement thermique (2) avec le dispositif de réhydratation (1) afin de faciliter un traitement des déblais chauffés.

24. Procédé selon l'une quelconque des revendications précédentes, comprenant, de plus, l'étape consistant à broyer les matières solides chaudes évacuées (26, 28).

25. Procède selon la revendication 24, dans lequel l'étape de broyage est effectuée par un broyeur à meules.

26. Procédé selon l'une quelconque des revendications précédentes, dans lequel le dispositif de trempe (4) comprend une enceinte de trempe et au moins un pulvérisateur d'eau (4a, 4b), le procède comprenant, de plus, l'étape consistant à pulvériser de l'eau de refroidissement par l'intermédiaire d'au moins un pulvérisateur d'eau (4a, 4b) dans le courant d'évacuation (25) en vue de produire le courant d'évacuation refroidi (29).

27. Procédé selon l'une quelconque des revendications précédentes, dans lequel les déblais de forage comprennent, de plus, d'autres contaminants.

28. Appareil pour traiter des déblais de forage, l'appareil comportant un dispositif de traitement thermique (2), un dispositif de trempe (4), **caractérisé en ce que** l'appareil comprend, de plus, un dispositif de réservoir à déversoir (40), le dispositif de réservoir à déversoir (40) comprenant un réservoir (45) doté d'une paroi (43) divisant le réservoir (45) en un côté propre (47) et en un côté sale (46), le côté sale (46) est divisé en un premier compartiment d'entrée (57), un deuxième compartiment (51), et un troisième compartiment (52), un premier déversoir supérieur (58) pour permettre au pétrole provenant du courant refroidi de se déverser à partir du premier compartiment d'entrée (57) dans le deuxième compartiment (51) et un second déversoir supérieur (51a) pour permettre au pétrole de s'écouler à partir du deuxième compartiment (51) dans le côté propre (47), un déversoir intérieur (59) pour permettre à l'eau de s'écouler à partir du premier compartiment (57) vers le troisième compartiment (52) et un troisième déversoir supérieur (53) pour permettre à l'eau provenant du troisième compartiment (52) de s'écouler dans le côté propre (47).
